# EUROPEAN PATENT APPLICATION

(11) **EP 3 338 933 A1**
(43) Date of publication of application: **27.06.2018**
(21) Application number: 16839412.0
(22) Date of filing: 27.04.2016
(51) Int. Cl.: B23K 9/00, B23K 9/025, B23K 9/095, B23K 31/12, B23K 37/02

(54) **AUTOMATIC WELDING SYSTEM FOR CORRUGATED MEMBRANE SHEET OF MEMBRANE TYPE LIQUEFIED-GAS CARGO HOLD, STRUCTURE FOR GUIDING AND FIXING AUTOMATIC WELDING APPARATUS FOR CORRUGATED MEMBRANE SHEET OF MEMBRANE TYPE LIQUEFIED-GAS CARGO HOLD, AND STRUCTURE FOR GUIDING AUTOMATIC WELDING APPARATUS FOR CORRUGATED MEMBRANE SHEET OF MEMBRANE TYPE LIQUEFIED-GAS CARGO HOLD**

(30) Priority: 21.08.2015 KR 20150117941
(71) Applicant: Daewoo Shipbuilding & Marine Engineering Co., Ltd., Seoul 04521 (KR)
(72) Inventor: PARK, Seong Woo, Geoje-si Gyeongsangnam-do 53224 (KR); KANG, Joong Kyoo, Geoje-si Gyeongsangnam-do 53296 (KR)
(74) Representative: Cabinet Beau de Loménie
(86) International application number: PCT/KR2016/004400
(87) International publication number: WO 2017/034121

(57) **Abstract**

The present invention relates to an automatic welding system for a corrugated membrane sheet of a membrane type liquefied-gas cargo hold, a structure for guiding and fixing an automatic welding apparatus for a corrugated membrane sheet of a membrane type liquefied-gas cargo hold, and a structure for guiding an automatic welding apparatus for a corrugated membrane sheet of a membrane type liquefied-gas cargo hold. When a corrugated membrane sheet is welded, a cross-anchor strip having a fixing groove is installed on a portion where longitudinal and lateral anchor strips, which are attached to the upper surface of a heat insulating panel on which the corrugated membrane sheet is mounted, cross each other, which makes it possible to install a welding guide that supports the automatic welding apparatus and guides movement of the automatic welding apparatus using the fixing groove, thereby stably performing automatic welding on the corrugated membrane sheet.

## Description

### [Technical Field]

The present invention relates to a corrugated membrane sheet automatic welding system for membrane-type liquefied-gas cargo holds, and, more particularly, to a corrugated membrane sheet automatic welding system for membrane-type liquefied-gas cargo holds, which includes a cross anchor strip having a securing groove, wherein the cross anchor strip is disposed at a junction between longitudinal and transverse anchor strips attached to an upper surface of an insulation panel on which corrugated membrane sheets to be welded are placed, such that a welding guide supporting and guiding an automatic welding apparatus is mounted using the securing groove, thereby stably performing automatic welding of the corrugated membrane sheets, a structure for guiding and securing a corrugated membrane sheet automatic welding apparatus for membrane-type liquefied-gas cargo holds, and a structure for guiding a corrugated membrane sheet automatic welding apparatus for membrane-type liquefied-gas cargo holds.

### [Background Art]

Generally, natural gas is transported in a gaseous state via onshore or offshore gas pipelines, or is transported to a distant destination by an LNG carrier after being liquefied into LNG.

LNG is obtained by cooling natural gas to cryogenic temperatures, for example, about -163°C and has a volume of about 1/600 that of natural gas in a gaseous state. Thus, LNG is suited to long distance transport by sea.

An LNG carrier, which is designed to carry LNG by sea to an onshore source of demand, or an LNG regasification vessel (LNG RV), which is designed to carry LNG by sea to an onshore source of demand, regasify the LNG, and discharge the regasified LNG to the onshore source of demand, is provided with a storage tank capable of withstanding cryogenic temperatures of LNG (commonly referred to as "cargo hold").

Recently, there is increasing demand for floating offshore structures such as LNG-floating production, storage and offloadings (FPSOs) and LNG-floating storage and regasification units (FSRUs). Such a floating offshore structure is also provided with a storage tank that is used in LNG carriers or LNG RVs.

An LNG-FPSO is a floating offshore structure that is designed to liquefy produced natural gas, store the liquefied natural gas in a storage tank, and, if necessary, offload the LNG onto an LNG carrier.

An LNG-FSRU is a floating offshore structure that is designed to store LNG offloaded from an LNG carrier in a storage tank and, if necessary, regasify the LNG and supply the regasified LNG to an onshore source of demand.

Such an offshore vessel carrying LNG by sea or storing LNG, such as LNG carriers, LNG RVs, LNG FPSOs, and LNG FSRUs, is provided therein with a storage tank storing LNG in a cryogenic state.

Such a storage tank is divided into an independent storage tank and a membrane-type storage tank depending on whether an insulator thereof directly receives a load of a cargo.

In addition, the membrane-type storage tank is divided into a GTT NO 96-type tank and a TGZ Mark III-type, and the independent storage tank is divided into an MOSS-type tank and an IHI-SPB-type tank.

Here, the insulation material and structure of the membrane-type storage tank may vary depending upon the type of a special metal sheet that is used as a material for the storage tank. Specifically, the GTT NO 96-type tank is manufactured using an Invar sheet (an alloy mainly composed of iron and nickel and having a very low coefficient of thermal expansion) and the Mark III-type tank is manufactured using a stainless steel sheet.

The GTT NO 96-type storage tank has a structure in which a primary and secondary sealing wall formed of an Invar sheet having a thickness of 0.5 mm to 1.5 mm and a primary and secondary insulation wall formed of a plywood box and perlite are alternately stacked on an inner wall of a hull.

In the GTT NO 96-type storage tank, the secondary sealing wall has almost the same level of liquid tightness and strength as the primary sealing wall, thereby safely supporting a cargo for a considerable period of time even when the primary sealing wall leaks.

An insulation system of the GTT NO 96-type storage tank is composed of two layers of insulation boxes formed of Invar (36% nickel), pearlite, and plywood.

Now, a typical cargo hold insulation layer for LNG carriers will be described with reference to the drawings.

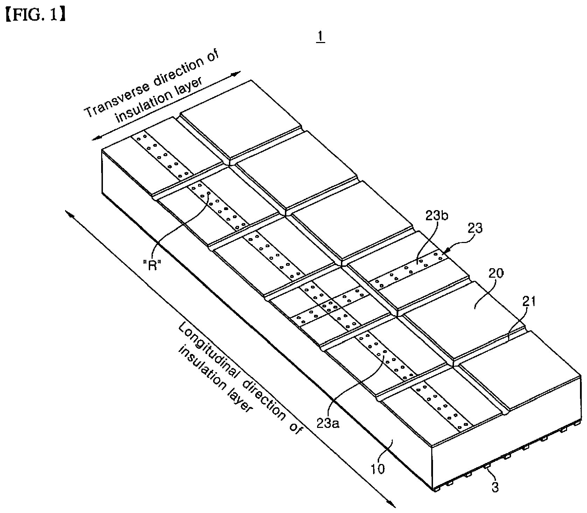

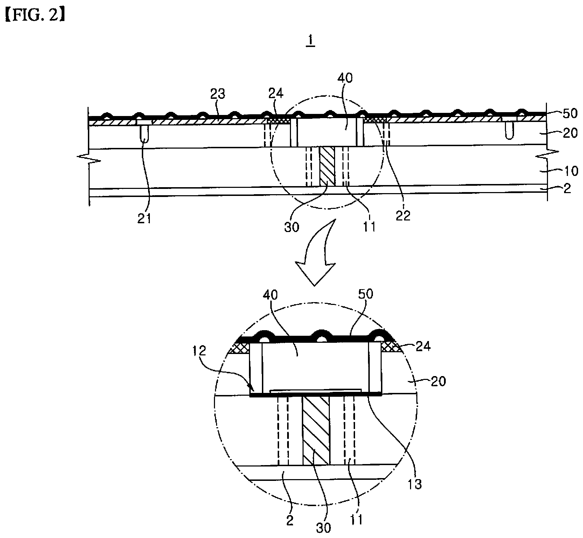

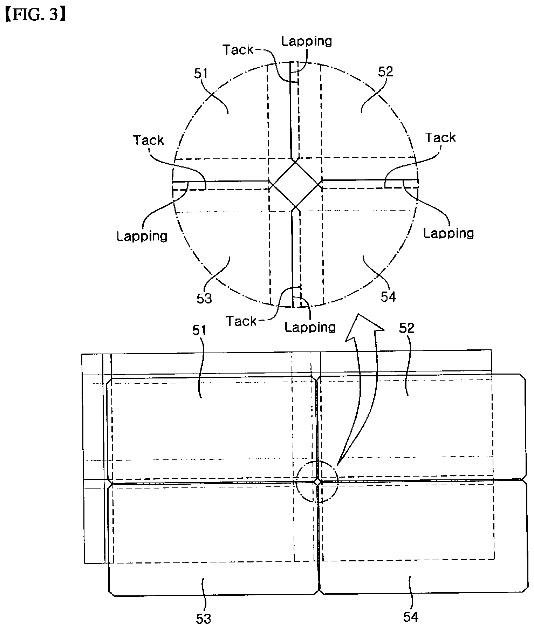

FIG. 1 is a perspective view of a typical cargo hold for liquefied gas carriers, FIG. 2 is a sectional view of a typical cargo hold insulation layer for liquefied gas carriers, and FIG. 3 is a plan view illustrating welding of corners of adjacent corrugated membrane sheets.

Referring to FIGS 1 and 2, the typical cargo hold insulation layer for liquefied gas carriers includes a plurality of insulation panel assembly units 1 disposed in series, wherein each of the insulation panel assembly units includes a secondary insulation panel 10, a primary insulation panel 20, a flat joint 30, a top bridge panel 40, and a corrugated membrane sheet 50.

The secondary insulation panel 10 is secured to an inner wall 2 of a storage tank (or inner hull) using epoxy mastic 3 and a stud bolt 11.

The flat joint 30 is disposed in a space between the secondary insulation panels 10 of the respective insulation panel assembly units 1 facing each other to seal the space and provide secondary insulation.

The secondary insulation panel 10 may be formed of reinforced-polyurethane foam and is provided on an upper surface thereof with a rigid triplex 12 (or rigid secondary barrier (RSB)).

The primary insulation panel 20 includes a sawing line 21, an anchor strip 23, and a thermal protection 24 and is attached to the upper side of the secondary insulation panel 10.

The top bridge panel 40 is disposed in a space between the primary insulation panels 20 of the respective insulation panel assembly units 1 facing each other to seal the space and provide primary insulation.

The primary insulation panel 20 may be formed of reinforced polyurethane foam and may be provided on an upper surface thereof with plywood. In addition, the primary insulation panel 20 includes a plurality of securing base supports 22.

The anchor strip 23 is formed of stainless steel and is secured to the primary insulation panel 20 using a rivet R.

The anchor strip 23 includes a longitudinal anchor strip 23a disposed in a longitudinal direction of the insulation layer and a transverse anchor strip 23b disposed in a transverse direction of the insulation layer.

The flat joint 30 is disposed in a space between the secondary insulation panels 10 of the respective insulation panel assembly units 1 facing each other to provide secondary insulation. The flat joint 30 may be formed of glass wool.

The top bridge panel 40 may be attached to an upper side of a flexible triplex 13 disposed on the primary insulation panel 10 and the flat joint 30.

The corrugated membrane sheet 50 is secured to the upper sides of the primary insulation panel 20 and the top bridge panel 40 through the anchor strip 23.

The corrugated membrane sheet 50 may be embossed to have uneven upper and lower surfaces.

Since an LNG carrier is intended to carry LNG at cryogenic temperatures, for example, about -163°C, by sea, various advanced technologies are required to provide heat insulation performance, structural performance, hermeticity and the like to a cargo hold of the LNG carrier. Particularly, for a membrane-type cargo hold for LNG carriers, a membrane sheet is welded to an upper side of a primary insulation panel, thereby providing hermeticity.

Referring to FIG. 3, for the typical cargo hold insulation layer for liquefied gas carriers, adjacent corrugated membrane sheets 50: 51 to 54 are temporarily secured to an anchor strip 23 by spot welding (provisional welding), followed by lap welding of the adjacent corrugated membrane sheets 50: 51 to 54 with corners thereof overlapping one another, thereby providing hermeticity.

However, typical structures for securing an automatic welding machine have difficulty in stably supporting the automatic welding machine during automatic welding of corrugated membrane sheets. Particularly, during welding of upper and side surfaces of a cargo hold, it is more difficult to support the automatic welding machine using such a typical securing structure due to the weight of the automatic welding machine, causing deterioration in workability and stability.

### [Disclosure]

### [Technical Problem]

Embodiments of the present invention have been conceived to solve such a problem in the art and aspects of the present invention are to provide a corrugated membrane sheet automatic welding system for membrane-type liquefied-gas cargo holds, which includes a cross anchor strip having a securing groove, wherein the cross anchor strip is disposed at a junction between longitudinal and transverse anchor strips attached to an upper surface of an insulation panel on which corrugated membrane sheets to be welded are placed, such that a welding guide supporting and guiding an automatic welding apparatus is mounted using the securing groove, thereby stably performing automatic welding of the corrugated membrane sheets, a structure for guiding and securing a corrugated membrane sheet automatic welding apparatus for membrane-type liquefied-gas cargo holds, and a structure for guiding a corrugated membrane sheet automatic welding apparatus for membrane-type liquefied-gas cargo holds.

### [Technical Solution]

In accordance with aspects of the present invention, there are provided a corrugated membrane sheet automatic welding system for membrane-type liquefied gas cargo holds, a structure for guiding and securing a corrugated membrane sheet automatic welding apparatus for membrane-type liquefied gas cargo holds, and a structure for guiding a corrugated membrane sheet automatic welding apparatus for membrane-type liquefied gas cargo holds.

The corrugated membrane sheet automatic welding system for membrane-type liquefied gas cargo holds includes: a longitudinal anchor strip disposed in a longitudinal direction of an insulation layer including corrugated membrane sheets as a first barrier; a transverse anchor strip disposed in a transverse direction of the insulation layer; a cross anchor strip disposed at a junction between the longitudinal anchor strip and the transverse anchor strip, the cross-anchor strip having a securing groove; a vertical support securely disposed in the securing groove; a welding guide connected to the vertical support; and an automatic welding apparatus movable along the welding guide to lap-weld corners of the corrugated membrane sheets adjacent to one another.

The automatic welding apparatus may include: a main body including a rail into which the welding guide is inserted; a moving wheel disposed on the rail to move the main body; a horizontal rotor mounted on an upper side of the main body to be rotatable in a horizontal direction; an X-axis/Y-axis rotor mounted on an upper side of the horizontal rotor to be rotatable in X-axis and Y-axis directions; an articulated arm connected at one end thereof to the X-axis/Y-axis rotor and provided at the other end thereof with a torch and a sensor detecting a welding field; and a wheel driver driving the moving wheel.

The articulated arm may be composed of two segments connected by a hinge, wherein each of the segments may have a telescopic structure.

The corners of the adjacent corrugated membrane sheets may be secured to one another by lap-welding using the automatic welding apparatus.

The structure for guiding and securing a corrugated membrane sheet automatic welding apparatus for membrane-type liquefied gas cargo holds includes: a cross anchor strip disposed at a junction between anchor strips respectively disposed in longitudinal and transverse directions of an insulation layer including corrugated membrane sheets as a first barrier, the cross anchor strip having a securing groove; a vertical support securely disposed in the securing groove; and a welding guide mounted on the vertical support to guide the automatic welding apparatus.

The structure for guiding a corrugated membrane sheet automatic welding apparatus for membrane-type liquefied gas cargo holds includes: a cross anchor strip disposed at a junction between anchor strips respectively disposed in longitudinal and transverse directions of an insulation layer including corrugated membrane sheets as a first barrier, the cross anchor strip having a securing groove; a vertical support securely disposed in the securing groove; and a welding guide mounted on the vertical support to guide the automatic welding apparatus, wherein the welding guide is longitudinally and transversely disposed immediately above the anchor strips.

### [Advantageous Effects]

As described above, the corrugated membrane sheet automatic welding system according to the present invention may be used in securing a corrugated membrane sheet to an upper side of a primary insulation layer or a secondary insulation layer.

In addition, the present invention provides a corrugated membrane sheet automatic welding system which can establish a stable automatic welding guide route simply by adding a cross anchor strip to a typical anchor strip configuration and can implement constant automatic welding conditions irrespective of the installation position of a cargo hold insulation system.

Further, the present invention provides a corrugated membrane sheet automatic welding system which allows easy attachment/detachment of a welding guide, allows the center of a cross anchor strip to serve as a barrier without any additional finishing process, and allows a securing groove of the cross anchor strip to be used as an anchor point for a vertical support even during placement of additional insulation layers on an insulation layer having a membrane welded thereto.

### [Description of Drawings]

FIG. 1 is a perspective view of a typical cargo hold for liquefied gas carriers.
FIG. 2 is a sectional view of a typical cargo hold insulation layer for liquefied gas carriers.
FIG. 3 is a plan view illustrating a typical method of welding corners of adjacent corrugated membrane sheets.
FIG. 4 is a perspective view of a membrane-type liquefied gas cargo hold according to the present invention.
FIG. 5 is a perspective view of a cross anchor strip according to one embodiment of the present invention.
FIG. 6 is a sectional view taken along line A-A of FIG. 5.
FIG. 7 is a perspective view of a cross anchor strip according to another embodiment of the present invention.
FIG. 8 is a sectional view taken along line B-B of FIG. 7.
FIG. 9 is a perspective view of a cross anchor strip according to a further embodiment of the present invention.
FIG. 10 is a perspective view illustrating mounting of a rectangular welding guide according to the present invention.
FIG. 11 is a perspective view illustrating mounting of a straight welding guide according to the present invention.
FIG. 12 and FIG. 13 are sectional views taken along line C-C of FIG. 5.
FIG. 14 shows a method of welding corners of adjacent corrugated membrane sheets according to the present invention, wherein a vertical support disposed at the center of a cross anchor strip does not interfere with the welding process.
FIG. 15 is a perspective view illustrating mounting of an automatic welding apparatus according to the present invention.
FIG. 16 is a side view of an automatic welding apparatus according to the present invention.

### [Best Mode]

A corrugated membrane sheet automatic welding system for membrane-type liquefied gas cargo holds according to the present invention includes: a longitudinal anchor strip disposed in a longitudinal direction of an insulation layer including corrugated membrane sheets as a first barrier; a transverse anchor strip disposed in a transverse direction of the insulation layer; a cross anchor strip disposed at a junction between the longitudinal anchor strip and the transverse anchor strip, the cross-anchor strip having a securing groove; a vertical support securely disposed in the securing groove; a welding guide connected to the vertical support; and an automatic welding apparatus movable along the welding guide to lap-weld corners of the corrugated membrane sheets adjacent to one another.

The automatic welding apparatus may include: a main body including a rail into which the welding guide is inserted; a moving wheel disposed on the rail to move the main body; a horizontal rotor mounted on an upper side of the main body to be rotatable in a horizontal direction; an X-axis/Y-axis rotor mounted on an upper side of the horizontal rotor to be rotatable in X-axis and Y-axis directions; an articulated arm connected at one end thereof to the X-axis/Y-axis rotor and provided at the other end thereof with a torch and a sensor detecting a welding field; and a wheel driver driving the moving wheel.

The articulated arm may be composed of two segments connected through a hinge, wherein each of the segments may have a telescopic structure.

The corners of the adjacent corrugated membrane sheets may be secured to one another by lap-welding using the automatic welding apparatus.

### [Mode for Invention]

Hereinafter, a corrugated membrane sheet automatic welding system for membrane-type liquefied gas cargo holds, a structure for guiding and securing a corrugated membrane sheet automatic welding apparatus for membrane-type liquefied gas cargo holds, and a structure for guiding a corrugated membrane sheet automatic welding apparatus for membrane-type liquefied gas cargo holds will be described.

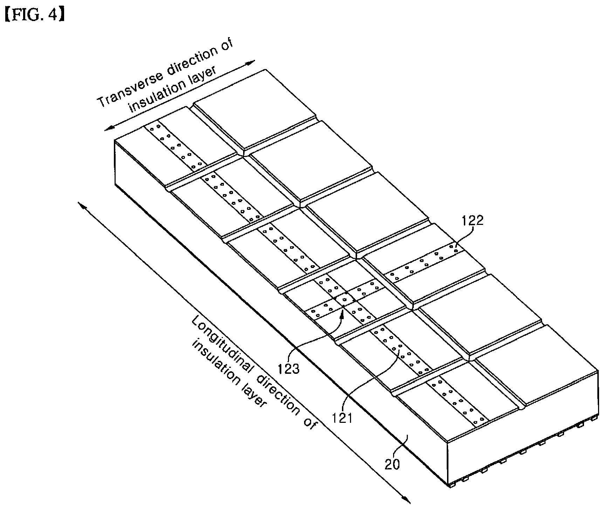

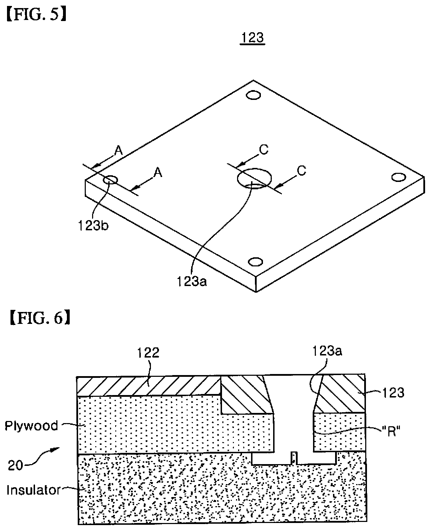

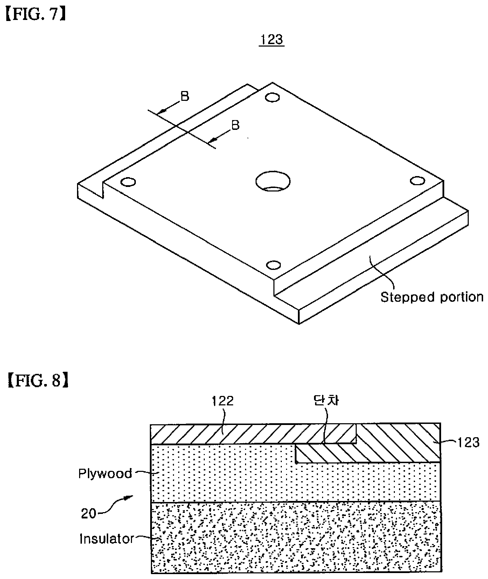

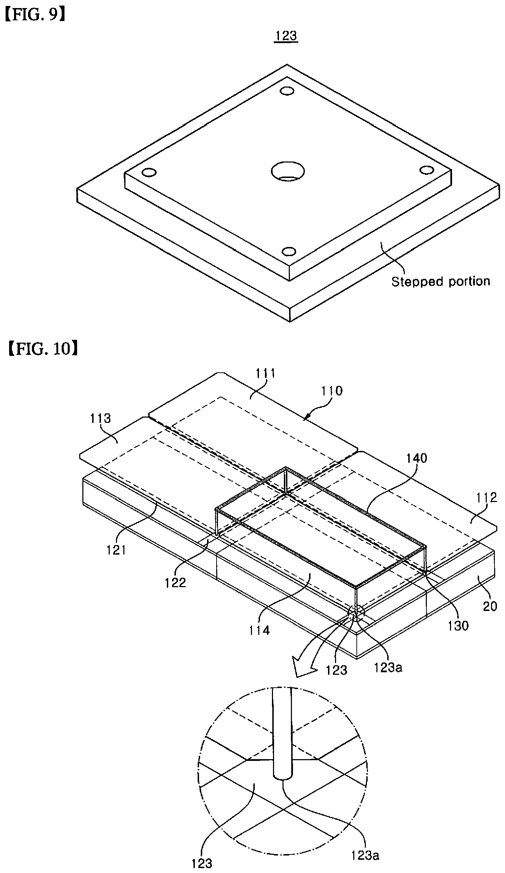

FIG. 4 is a perspective view of a membrane-type liquefied gas cargo hold according to the present invention, FIG. 5 is a perspective view of a cross anchor strip according to one embodiment of the present invention, FIG. 6 is a sectional view taken along line A-A of FIG. 5, FIG. 7 is a perspective view of a cross anchor strip according to another embodiment of the present invention, FIG. 8 is a sectional view taken along line B-B of FIG. 7, and FIG. 9 is a perspective view of a cross anchor strip according to a further embodiment of the present invention.

A corrugated membrane sheet automatic welding system for membrane-type liquefied-gas cargo holds according to the present invention may be applied to both a secondary insulation layer including a second insulation panel, a second barrier, a first insulation panel, and a corrugated membrane sheet as a first barrier and a primary insulation layer including a first insulation panel and a corrugated membrane sheet as a first barrier.

The corrugated membrane sheet automatic welding system according to the present invention includes a cross anchor strip 123 having a securing groove 123a, wherein the cross anchor strip is disposed at a junction between longitudinal and transverse anchor strips 121, 122 attached to an upper surface of an insulation panel 20 on which corrugated membrane sheets to be welded 110: 111 to 114 are placed, such that a welding guide 140 supporting and guiding an automatic welding apparatus 200 is mounted using the securing groove 123a, thereby stably performing automatic welding of the corrugated membrane sheets 110: 111 to 114.

In the corrugated membrane sheet automatic welding system according to the present invention, the longitudinal anchor strip 121 is disposed in a longitudinal direction of an insulation layer, the transverse anchor strip 122 is disposed in a transverse direction of the insulation layer, and the cross anchor strip 123 having the securing groove 123a is disposed at a junction between the longitudinal anchor strip 121 and the transverse anchor strip 122.

The securing groove 123a is formed at the center of the cross anchor strip 123, and the cross-anchor strip 123 is formed at an edge thereof with a securing hole 123b for securing the cross anchor strip 123 to the upper surface of the insulation panel 20 using a rivet R.

The cross-anchor strip 123 may adjoin the longitudinal anchor strip 121 and the transverse anchor strip 122 in a face-to-face relationship, as shown in FIG. 5 and

FIG. 6, or may be stepped to overlap the longitudinal anchor strip 121 and the transverse anchor strip 122, as shown in FIG. 7 and FIG. 8.

Referring to FIG. 9, the cross anchor strip 123 may be stepped in both directions rather than in one direction as in FIG. 7. Alternatively, a stepped portion may be formed in the longitudinal anchor strip and the transverse anchor strip rather than in the cross anchor strip, although not shown in the drawings.

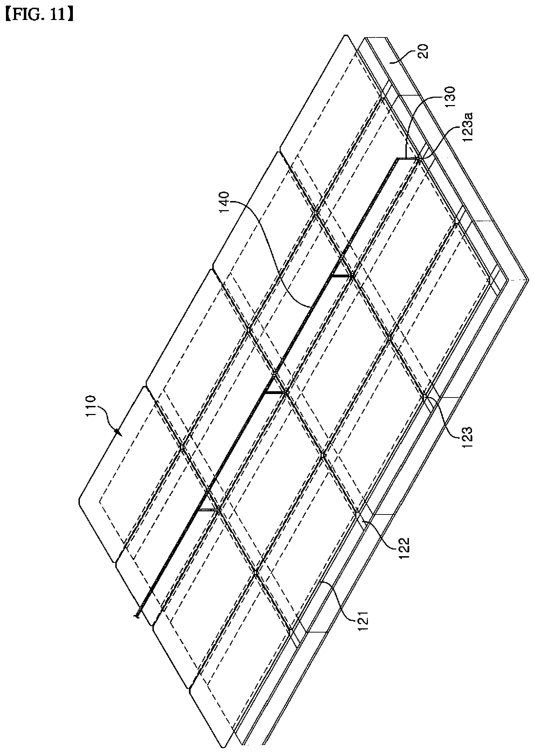

FIG. 10 is a perspective view of a rectangular welding guide according to the present invention, and FIG. 11 is a perspective view of a straight welding guide according to the present invention.

Referring to FIGS 10 and 11, a vertical support 130 serving as an automatic welding support may be disposed in the securing groove 123a, such that the welding guide 140 is connected to the vertical support 130.

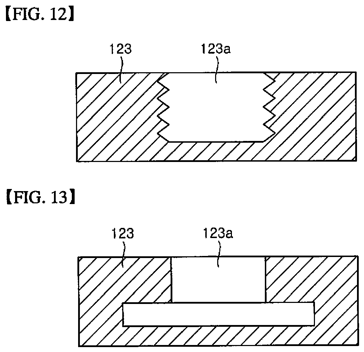

FIG. 12 and FIG. 13 are sectional views taken along line C-C of FIG. 5.

For fastening the vertical support 130 to the securing groove 123a, the securing groove 123a may be internally threaded and the vertical support 130 (see FIG. 10) may be externally threaded at a lower end, as shown in FIG. 12. Alternatively, the vertical support 130 (see FIG. 10) may be fastened to the securing groove 123a by a push-and-flip mechanism in which the lower end of the vertical support is inserted into the securing groove, rotated, and caught by the securing groove, as shown in FIG. 13. In both of these embodiments, the securing groove 123a has a blind-hole shape to prevent leakage of liquefied gas.

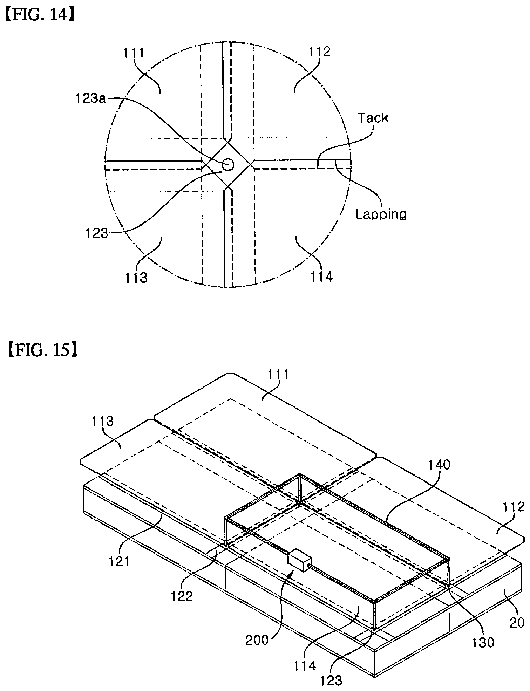

FIG. 14 is a plan view illustrating welding of corners of adjacent corrugated membrane sheets, wherein the vertical support disposed at the center of the cross anchor strip does not interfere with the welding process, and FIG. 15 is a perspective view illustrating mounting of the automatic welding apparatus according to the present invention.

Referring to FIG. 14 and FIG. 15, the automatic welding apparatus 200 is moved along the welding guide 140 to lap-weld the corners of the adjacent corrugated membrane sheets 110: 111 to 114.

Each of the corrugated membrane sheets 110: 111 to 114 has a generally rectangular shape and is chamfered at four corners thereof, such that the vertical support 130 disposed at the center of the cross anchor strip 123 does not interfere with the welding process when the corners of the adjacent corrugated membrane sheets 110: 111 to 114 are lap-welded to one another.

Since the chamfered four corners of the corrugated membrane sheets are also welded to the cross anchor strip 123 and the securing groove 123a of the cross anchor strip 123 has a blind-hole shape, the cross-anchor strip 123 can serve as a barrier, like the corrugated membrane sheets 110: 111 to 114 even when the center of the cross-anchor strip 123 is not covered with the corrugated membrane sheets 110: 111 to 114. In addition, the securing groove 123a of the cross-anchor strip 123 does not need to be subjected to any additional finishing process after the welding process and may be used as an anchor point for the vertical support during placement of additional insulation layers.

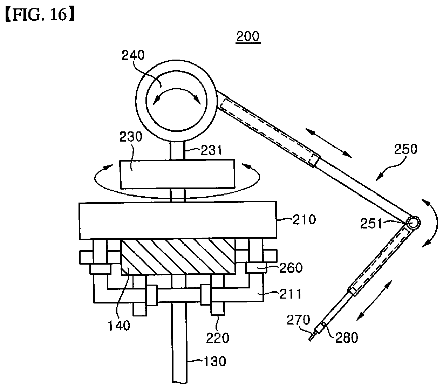

FIG. 16 is a side view of the automatic welding apparatus.

Referring to FIG. 15 and FIG. 16, the automatic welding apparatus 200 includes a main body 210, a moving wheel 220, a horizontal rotor 230, an X-axis/Y-axis rotor 240, an articulated arm 250, and a wheel driver 260.

The main body 210 includes a rail 211 into which the welding guide 140 is inserted. The rail 211 may have a rectangular channel-like shape.

The moving wheel 220 is disposed on the rail 211 to move the main body 210, and the wheel driver 260 drives the moving wheel 220. The wheel driver 260 includes a motor.

The horizontal rotor 230 is mounted on an upper side of the main body 210 to be horizontally rotatable about a vertical shaft 231.

The X-axis/Y-axis rotor 240 is mounted on an upper side of the horizontal rotor 230 to be rotatable in X-axis and Y-axis directions.

The articulated arm 250 is connected at one end thereof to the X-axis/Y-axis rotor 240 and is provided at the other end thereof with a torch 270 and a sensor 280 detecting a welding field.

The articulated arm 250 is composed of two segments connected by a hinge 251, wherein each of the segments may have a telescopic structure. By way of example, the segment may have a double tubular structure.

Although not shown in FIG. 16, the articulated arm 250 may have a multi-degree of freedom articulated structure in which the torch 270 is freely movable according to welding posture and position of a welding field. In addition, the articulated arm 250 may include a power supply (not shown).

In accordance with another aspect of the present invention, a structure for guiding and securing a corrugated membrane sheet automatic welding apparatus for membrane type liquefied-gas cargo holds includes: a cross anchor strip 123 disposed at a junction between anchor strips 121, 122 respectively disposed in longitudinal and transverse directions of an insulation layer including corrugated membrane sheets 110: 111 to 114 as a first barrier, the cross anchor strip having a securing groove 123a; a vertical support 130 securely disposed in the securing groove 123a to serve as an automatic welding support; and a welding guide 140 mounted on the vertical support 130 to guide an automatic welding apparatus 200. Here, the welding guide 140 may be integrally formed with the vertical support 130.

In accordance with a further aspect of the present invention, a structure for guiding a corrugated membrane sheet automatic welding apparatus for membrane-type liquefied gas cargo holds includes: a cross anchor strip 123 disposed at a junction between anchor strips 121, 124 respectively disposed in longitudinal and transverse directions of an insulation layer including corrugated membrane sheets 110: 111 to 114 as a first barrier, the cross anchor strip having a securing groove 123a ; a vertical support 130 securely disposed in the securing groove123a; and a welding guide 140 mounted on the vertical support 130 to guide an automatic welding apparatus 200, wherein the welding guide 140 is longitudinally and transversely disposed immediately above the insulation layer.

In the corrugated membrane sheet automatic welding system for membrane-type liquefied-gas cargo holds, the lower end of the vertical support 130 is inserted and secured into the securing groove 123a of the cross anchor strip 123 and an upper end of the vertical support 130 supports the welding guide 140. The automatic welding apparatus 200 is mounted on the welding guide 140 and is moved along the welding guide 140 to weld the corners of the corrugated membrane sheets 110: 111 to 114 as the first barrier.

Each of the corrugated membrane sheets 110: 111 to 114 has a generally rectangular shape and is chamfered in advance at corners thereof, such that, when the corners of the adjacent corrugated membrane sheets 110: 111 to 114 are lap-welded to one another, the vertical support 130 disposed at the center of the cross-anchor strip 123 does not interfere with the welding process.

Since the chamfered four corners of the corrugated membrane sheet are also welded to the cross anchor strip 123 and the securing groove 123a of the cross anchor strip 123 has a blind-hole shape, the cross-anchor strip 123 can serve as a barrier, like the corrugated membrane sheets 110: 111 to 114, even when the center of the cross-anchor strip 123 is not covered with the corrugated membrane sheets 110: 111 to 114. In addition, the securing groove 123a of the cross-anchor strip 123 can serve as a barrier without being subjected to any additional finishing process after the welding process.

In operation of the automatic welding apparatus 200, the wheel driver 260 is operated to rotate the moving wheel 220, and the automatic welding apparatus 200 is moved by friction contact between the moving wheel 220 and the welding guide 140. The articulated arm 250 includes: two or more segments connected by the hinge 251 to be movable in X-axis, Y-axis and horizontal directions; the sensor 280 detecting a welding field; and the torch 270 producing a hot flame for welding. Herein, "X-axis direction" and "Y-axis direction" may refer to directions perpendicular and parallel to the plane on FIG. 16, respectively. In addition, a universal joint structure may be employed for rotation of the articulated arm in the X-axis direction and the Y-axis direction.

### [Industrial Applicability]

As described above, a corrugated membrane sheet automatic welding system according to the present invention may be used in securing a corrugated membrane sheet to an upper side of each of a primary insulation layer and a secondary insulation layer.

In addition, the present invention provides a corrugated membrane sheet automatic welding system which can establish a stable automatic welding guide route simply by adding a cross anchor strip to a typical anchor strip configuration and can implement the same automatic welding conditions irrespective of the installation position of a cargo hold insulation system.

Further, the present invention provides a corrugated membrane sheet automatic welding system which allows easy attachment/detachment of a welding guide, allows the center of a cross anchor strip to serve as a barrier without any additional finishing process, and allows a securing groove of the cross anchor strip to be used as an anchor point for a vertical support even during placement of additional insulation layers on an insulation layer having a membrane welded thereto.

## Claims

1. A corrugated membrane sheet automatic welding system for membrane-type liquefied gas cargo holds, comprising:
a longitudinal anchor strip disposed in a longitudinal direction of an insulation layer including corrugated membrane sheets as a first barrier;
a transverse anchor strip disposed in a transverse direction of the insulation layer;
a cross anchor strip disposed at a junction between the longitudinal anchor strip and the transverse anchor strip, the cross-anchor strip having a securing groove;
a vertical support securely disposed in the securing groove;
a welding guide connected to the vertical support; and
an automatic welding apparatus movable along the welding guide to weld corners of the corrugated membrane sheets adjacent to one another.

2. The corrugated membrane sheet automatic welding system according to claim 1, wherein the corners of the adjacent corrugated membrane sheets are secured to one another by lap-welding using the automatic welding apparatus.

3. The corrugated membrane sheet automatic welding system according to claim 1, wherein the securing groove is internally threaded and the vertical support is externally threaded at a lower end thereof.

4. The corrugated membrane sheet automatic welding system according to claim 1, wherein the vertical support is fastened to the securing groove by a push-and-flip mechanism in which a lower end of the vertical support is inserted into the securing groove, rotated, and caught by the securing groove.

5. The corrugated membrane sheet automatic welding system according to claim 1, wherein the securing groove has a blind-hole shape.

6. The corrugated membrane sheet automatic welding system according to claim 1, wherein the automatic welding apparatus comprises:
a main body comprising a rail into which the welding guide is inserted;
a moving wheel disposed on the rail to move the main body;
a horizontal rotor mounted on an upper side of the main body to be rotatable in a horizontal direction;
an X-axis/Y-axis rotor mounted on an upper side of the horizontal rotor to be rotatable in X-axis and Y-axis directions;
an articulated arm connected at one end thereof to the X-axis/Y-axis rotor and provided at the other end thereof with a torch and a sensor detecting a welding field; and
a wheel driver driving the moving wheel.

7. The corrugated membrane sheet automatic welding system according to claim 6, wherein the articulated arm is composed of two segments connected by a hinge, each of the segments having a telescopic structure.

8. A structure for guiding and securing a corrugated membrane sheet automatic welding apparatus for membrane-type liquefied gas cargo holds, comprising:
a cross anchor strip disposed at a junction between anchor strips respectively disposed in longitudinal and transverse directions of an insulation layer comprising corrugated membrane sheets as a first barrier, the cross anchor strip having a securing groove;
a vertical support securely disposed in the securing groove; and
a welding guide mounted on the vertical support to guide the automatic welding apparatus.

9. A structure for guiding a corrugated membrane sheet automatic welding apparatus for membrane-type liquefied gas cargo holds, comprising:
a cross anchor strip disposed at a junction between anchor strips respectively disposed in longitudinal and transverse directions of an insulation layer comprising corrugated membrane sheets as a first barrier, the cross anchor strip having a securing groove;
a vertical support securely disposed in the securing groove; and
a welding guide mounted on the vertical support to guide the automatic welding apparatus,
wherein the welding guide is longitudinally and transversely disposed immediately above the anchor strips.

10. The structure according to claim 9, wherein the securing groove is internally threaded and the vertical support is externally threaded at a lower end thereof.

11. The structure according to claim 9, wherein the vertical support is fastened to the securing groove by a push-and-flip mechanism in which the lower end of the vertical support is inserted into the securing groove, rotated, and caught by the securing groove.

12. The structure according to claim 9, wherein the securing groove has a blind-hole shape.
